# EUROPEAN PATENT SPECIFICATION

(11) **EP 3 183 898 B1**
(45) Date of publication and mention of the grant of the patent: **26.06.2019**
(21) Application number: 15833325.2
(22) Date of filing: 19.08.2015
(51) Int. Cl.: H04W 4/06, H04L 29/06, H04W 88/04, H04W 4/00, H04W 4/10, H04W 84/08, H04W 4/70

(54) **RELAY-MODE AND DIRECT-MODE OPERATIONS FOR PUSH-TO-TALK-OVER-CELLULAR (POC) USING WIFI TECHNOLOGIES**
BETRIEB IM RELAISMODUS DIREKTMODUS FÜR PUSH-TO-TALK-OVER-CELLULAR (POC) MIT WIFI-TECHNOLOGIEN
OPÉRATIONS EN MODE RELAIS ET EN MODE DIRECT POUR DES COMMUNICATIONS POC AU MOYEN DE TECHNOLOGIES WIFI

(30) Priority: 19.08.2014 US 201462039272 P
(43) Date of publication of application: 28.06.2017
(73) Proprietor: Kodiak Networks, Inc., Plano, TX 75074 (US)
(72) Inventor: PATEL, Krishnakant M., Richardson, TX 75082 (US); VEMPATI, Brahmananda R., Dallas, TX 75287 (US); NEGALAGULI, Harisha M., Richardson, TX 75082 (US)
(74) Representative: Optimus Patents Limited
(86) International application number: PCT/US2015/045951
(87) International publication number: WO 2016/028926

(56) References cited:
- US-A1- 2004 224 710
- US-A1- 2005 202 807
- US-A1- 2008 171 567
- US-A1- 2013 231 088
- US-A1- 2014 094 119

## Description

### BACKGROUND OF THE INVENTION

### 1. Field of the Invention.

This invention relates in general to advanced voice services in wireless communications networks, and more specifically, to relay-mode and direct-mode operations for Push-to-talk-over-Cellular (PoC) using WiFi technologies.

### 2. Description of Related Art.

Advanced voice services (AVS), also known as Advanced Group Services (AGS), such as two-way half-duplex voice calls within a group, also known as Push-to-talk-over-Cellular (PoC), Push-to-Talk (PTT), or Press-to-Talk (P2T), and one-way half-duplex voice calls within a group, also known as Broadcast, as well as other AVS functions, such as Push-to-Conference (P2C) or Instant Conferencing, Push-to-Message (P2M), etc., are described in the co-pending and commonly-assigned patent applications cross-referenced above and incorporated by reference herein. These AVS functions have enormous revenue earnings potential for wireless communications systems, such as cellular networks, wireless data networks and IP networks.

US2008/171567 describes apparatus and techniques that can improve the coverage of push-to-talk wireless networks and services.

One approach to PoC is based on packet or voice-over-IP (VoIP) technologies. This approach capitalizes on the "bursty" nature of PoC conversations and makes network resources available only during talk bursts and hence is highly efficient from the point of view of network and spectral resources. This approach promises compliance with newer and emerging packet-based standards, such as GPRS (General Packet Radio Service), UMTS (Universal Mobile Telecommunications System), 3G/4G/LTE (3^{rd} Generation/4^{th} Generation/Long Term Evolution), etc.

Nonetheless, there is a need in the art for improvements to the methods and systems for delivering the advanced voice services, such as PoC, that comply with both existing and emerging wireless packet-based standards and yet provide superior user experiences. Many existing implementations of PoC suffer from an inferior user experience. The present invention satisfies the need for a superior user experience, and also defines procedures for practical implementation of PoC in commercial, standards-based, cellular networks.

### SUMMARY OF THE INVENTION

To overcome the limitations in the prior art described above, and to overcome other limitations that will become apparent upon reading and understanding the present specification, the present invention discloses a system and method for relay-mode and direct-mode operations for Push-to-talk-over-Cellular (PoC) using WiFi technologies. The invention is defined by the independent claims. Preferred embodiments are defined in the dependent claims.

### BRIEF DESCRIPTION OF THE DRAWINGS

Referring now to the drawings in which like reference numbers represent corresponding parts throughout:
FIG. 1 illustrates the system architecture used in one embodiment of the present invention.
FIG. 2 is a state diagram that illustrates the operation of a PoC call session according to one embodiment of the present invention.
FIG. 3 illustrates Relay-Mode operation when there is limited radio access network (RAN) connectivity to a wide area network (WAN), but local WiFi connectivity to a LAN (local area network), for one or more handsets in a group, according to one embodiment of the present invention.
FIG. 4 illustrates Relay-Mode operation when there is limited RAN connectivity to the WAN, with local WiFi connectivity to the LAN, and the unicast tunneling of multicast IP packets, for one or more handsets in a group, according to one embodiment of the present invention.
FIG. 5 illustrates Direct-Mode operation when there is limited RAN connectivity to the WAN, without local WiFi connectivity to a LAN, but with Direct Mode connectivity using WiFi-Direct, for one or more handsets in a group, according to one embodiment of the present invention.

### DETAILED DESCRIPTION OF THE INVENTION

In the following description of the preferred embodiment, reference is made to the accompanying drawings which form a part hereof, and in which is shown by way of illustration the specific embodiment in which the invention may be practiced. It is to be understood that other embodiments may be utilized as structural changes may be made without departing from the scope of the present invention.

### 1 Overview

The present invention discloses a system for implementing advanced voice services in wireless communications networks that provides a feature-rich server architecture with a flexible client strategy. This system is an Open Mobile Alliance (OMA) standards-compliant solution that can be easily deployed, thereby enabling carriers to increase their profits, improve customer retention and attract new customers without costly upgrades to their network infrastructure. This system is built on a proven, reliable all-IP (Internet Protocol) platform. The highly scalable platform is designed to allow simple network planning and growth. Multiple servers can be distributed across operator networks for broad geographic coverage and scalability to serve a large and expanding subscriber base.

### 1.1 Definitions

The following table defines various acronyms, including industry-standard acronyms, that are used in this specification.

| **Acronym** | **Description** |
|---|---|
| ATCA | Advanced Telecommunications Computing Architecture |
| DnD | Do not Disturb |
| DNS | Domain Name Server |
| DTLS | Datagram Transport Layer Security |
| MBMS/eMBMS | Multimedia Broadcast Multicast Services |
| GPRS | General Packet Radio Service |
| GSM | Global System for Mobile communications |
| HTTP | Hypertext Transport Protocol |
| HTTPS | Secure Hypertext Transport Protocol |
| IMSI | International Mobile Subscriber Identity |
| IP | Internet Protocol |
| IPA | Instant Personal Alert |
| MBCP | Media Burst Control Protocol |
| MCC | Mobile Country Code |
| MDN | Mobile Directory Number |
| MNC | Mobile Network Code |
| MS-ISDN | Mobile Station International Subscriber Directory Number |
| OMA | Open Mobile Alliance |
| PoC | Push -to-talk -over -Cellular |
| PGW | Packet GateWay |
| PTT | Push-To-Talk |
| RTCP | Realtime Transport Control Protocol |
| RTP | Realtime Transport Protocol |
| SDP | Session Description Protocol |
| SGW | Serving GateWay |
| SIM | Subscriber Identity Module |
| SIP | Session Initiation Protocol |
| SMMP | Short Message peer-to-peer Protocol |
| SMS | Small Message Service |
| SRTP | Secure Real-time Transport Protocol |
| SSID | Service Set Identifier |
| SSL | Secure Sockets Layer protocol |
| SSRC | Synchronization SouRCe |
| TLS | Transport layer security protocol |
| UDP | User Datagram Protocol |
| URI | Uniform Resource Identifier |
| VoIP | Voice-over-IP |
| XCAP | XML Configuration Access Protocol |
| XDM | XML Document Management |
| XML | Extensible Mark-up Language |
| 4G/LTE | 4^{th} Generation/Long Term Evolution |

The following table defines various terms, including industry-standard terms, that are used in this specification.

| **Term** | **Description** |
|---|---|
| 1-1 PoC Session | A feature enabling a PoC User to establish a PoC Session with another PoC User. |
| Ad Hoc PoC Group Session | A PoC Group Session established by a PoC User to PoC Users listed on the invitation. The list includes PoC Users or PoC Groups or both. |
| Answer Mode | A PoC Client mode of operation for the terminating PoC Session invitation handling. |
| Controlling PoC Function | A function implemented in a PoC Server, providing centralized PoC Session handling, which includes media distribution, Talk Burst Control, Media Burst Control, policy enforcement for participation in the PoC Group Sessions, and participant information. |
| Corporate | These subscribers will only receive contacts and groups from a corporate administrator. That means they cannot create their own contacts and groups from handset. |
| Corporate Public | These subscribers receive contacts and groups from a corporate administrator in addition to user-created contacts and groups. |
| Corporate Administrator | A user who manages corporate subscribers, their contacts and groups. |
| Firewall | A device that acts as a barrier to prevent unauthorized or unwanted communications between computer networks and external devices. |
| Home PoC Server | The PoC Server of the PoC Service Provider that provides PoC service to the PoC User. |
| Instant Personal Alert | A feature in which a PoC User sends a SIP based instant message to a PoC User requesting a 1-1 PoC Session. |
| Law Enforcement Agency | An organization authorized by a lawful authorization based on a national law to request interception measures and to receive the results of telecommunications interceptions. |
| Lawful Interception | The legal authorization, process, and associated technical capabilities and activities of Law Enforcement Agencies related to the timely interception of signaling and content of wire, oral, or electronic communications. |
| Notification | A message sent from the Presence Service to a subscribed watcher when there is a change in the Presence Information of some presentity of interest, as recorded in one or more Subscriptions. |
| Participating PoC Function | A function implemented in a PoC Server, which provides PoC Session handling, which includes policy enforcement for incoming PoC Sessions and relays Talk Burst Control and Media Burst Control messages between the PoC Client and the PoC Server performing the Controlling PoC Function. The Participating PoC Function may also relay RTP Media between the PoC Client and the PoC Server performing the Controlling PoC Function. |
| PoC Client | A functional entity that resides on the User Equipment that supports the PoC service. |
| Pre-Arranged PoC Group Identity | A SIP URI identifying a Pre-Arranged PoC Group. A Pre-Arranged PoC Group Identity is used by the PoC Client, e.g., to establish PoC Group Sessions to the Pre-Arranged PoC Groups. |
| Pre-Arranged PoC Group | A persistent PoC Group. The establishment of a PoC Session to a Pre-Arranged PoC Group results in the members being invited. |
| Pre-Established Session | The Pre-Established Session is a SIP Session established between the PoC Client and its Home PoC Server. The PoC Client establishes the Pre-Established Session prior to making requests for PoC Sessions to other PoC Users. To establish a PoC Session based on a SIP request from the PoC User, the PoC Server conferences other PoC Servers or users to the Pre-Established Session so as to create an end-to-end connection. |
| Presence Server | A logical entity that receives Presence Information from a multitude of Presence Sources pertaining to the Presentities it serves and makes this information available to Watchers according to the rules associated with those Presentities. |
| Presentity | A logical entity that has Presence Information associated with it. This Presence Information may be composed from a multitude of Presence Sources. A Presentity is most commonly a reference for a person, although it may represent a role such as "help desk" or a resource such as "conference room #27". The Presentity is identified by a SIP URI, and may additionally be identified by a tel URI or a pres URI. |
| Public | These subscribers create and manage their contacts and groups. |
| Serving Server | A set of primary and secondary servers. |
| Subscription | The information kept by the Presence Service about a subscribed watcher's request to be notified of changes in the Presence Information of one or more Presentities. |
| Watcher | Any uniquely identifiable entity that requests Presence Information about a Presentity from the Presence Service. |
| WiFi | A wireless local area network (WLAN). |

### 2 System Architecture

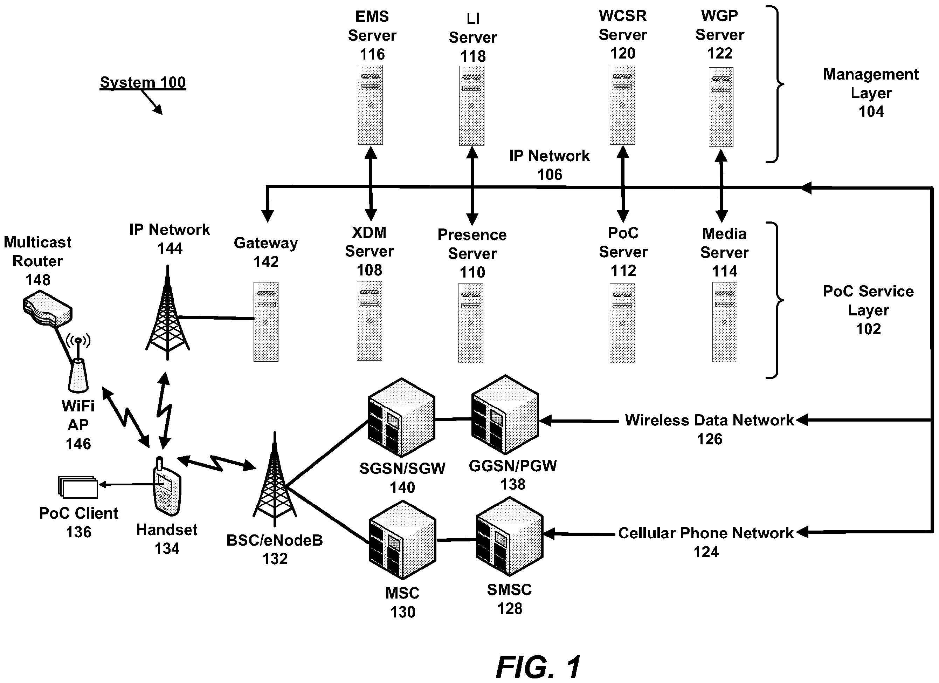

FIG. 1 illustrates the system architecture used in the present invention. This architecture conforms to the Advanced Telecommunications Computing Architecture (ATCA) standard to support the advanced voice services of the present invention. ATCA is an open standards-based, high-availability telecommunications platform architecture.

Preferably, the system 100 includes one or more PoC Service Layers 102 and one or more Management Layers 104, each of which is comprised of one or more servers interconnected by one or more IP networks 106. Specifically, the PoC Service Layer 102 includes one or more XML Document Management (XDM) Servers 108, Presence Servers 110, PoC Servers 112, and Media Servers 114, while the Management Layer 104 includes one or more Element Management System (EMS) Servers 116, Lawful Intercept (LI) Servers 118, Web Customer Service Representative (WCSR) Servers 120, and Web Group Provisioning (WGP) Servers 122. These various servers are described in more detail below.

The PoC Service Layer 102 and Management Layer 104 are connected to one or more wireless communications networks, such as cellular phone networks 124 and wireless data networks 126, as well as one or more IP networks 106. Note that the cellular phone networks 124 and wireless data networks 126 may be implemented in a single network or as separate networks. The cellular phone network 124 includes one or more Short Message Service Centers (SMSCs) 128, Mobile Switching Centers (MSCs) 130, and Base Station Components (BSCs) 132, wherein the BSCs 132 include controllers and transceivers that communicate with one or more customer handsets 134 executing a PoC Client 136. A handset 134 is also referred to as a mobile unit, mobile station, mobile phone, cellular phone, etc. and may comprise any wireless and/or wired device. The wireless data network 126, depending on its type, e.g., GPRS or 4G/LTE, includes one or more Gateway GPRS Support Nodes (GGSNs) or Packet Gateways (PGWs) 138 and Serving GPRS Support Nodes (SGSNs) or Serving GateWays (SGWs) 140, which also communicate with customer handsets 134 via BSCs or eNodeBs 132.

In one embodiment of the present invention, the PoC Service Layer 102 and Management Layer 104 are connected to one or more Gateways 142, which are coupled to one or more external IP networks 144, in order to communicate with one or more PoC Clients 136 on one or more handsets 134. Traffic to and from the wireless data networks 126 also traverses Gateways 142.

In one embodiment of the present invention, the handsets 134 may be WiFi-enabled and thus capable of communicating with local WiFi networks, which may be comprised of one or more WiFi Access Points (APs) 146, as well as Multicast Routers 148. Moreover, the handsets 134 may be able to communicate directly with other handsets 134 using WiFi-Direct or other Direct Mode communications protocols.

### 2.1 Cellular Phone Network

The PoC Service Layer 102 interacts with the SMSC 128 on the cellular phone network 124 to handle Short Message Service (SMS) operations, such as routing, forwarding and storing incoming text messages on their way to desired endpoints.

### 2.2 Wireless Data Network

The PoC Service Layer 102 also interacts with the following entities on the wireless data network 126:
- The GGSN/PGW 138 transfers IP packets between the PoC Client 136 and the various servers:
   ▪ SIP/IP signaling messages between the PoC Server 112 and PoC Client 136 for control traffic exchange (i.e., control packets) for PoC call sessions.
   ▪ RTP/IP, RTCP/IP and MBCP/IP packets between the Media Server 114 and PoC Client 136 for bearer traffic exchange (i.e., voice packets) for PoC call sessions.
   ▪ SIP/IP signaling messages between the Presence Server 110 and PoC Client 136 for presence information.
   ▪ XCAP/HTTP/IP and SIP/IP signaling between the XDM Server 108 and PoC Client 136 for document management.
- The SMSC 128 handles authentication:
   ▪ The XDM Server 108 communicates with the SMSC 128 via SMPP/IP for receiving the authentication code required for PoC Client 136 activation from the handset 134.

### 2.3 WiFi Network

The PoC Service Layer 102 also interacts with the following entities on the IP network 144:
- The Gateway 142 transfers IP packets between the PoC Client 136 and the various servers:
   ▪ SIP/IP signaling messages between the PoC Server 112 and PoC Client 136 for control traffic exchange (i.e., control packets) for PoC call sessions.
   ▪ RTP/IP, RTCP/IP and MBCP/IP packets between the Media Server 114 and PoC Client 136 for bearer traffic exchange (i.e., voice packets) for PoC call sessions.
   ▪ SIP/IP signaling messages between the Presence Server 110 and PoC Client 136 for presence information.
   ▪ XCAP/HTTP/IP and SIP/IP signaling between the XDM Server 108 and PoC Client 136 for document management.
   ▪ SIP/IP signaling messages between the XDM Server 108 and PoC Client 136 for receiving the authentication code required for PoC Client 136 activation from the handset 134.

### 2.4 PoC Service Layer Elements

As noted above, the PoC Service Layer 102 is comprised of the following elements:
- PoC Server 112,
- Media Server 114,
- Presence Server 110,
- XDM Server 108, and
- Gateway 142.

These elements are described in more detail below.

### 2.4.1 PoC Server

The PoC Server 112 handles the PoC call session management and is the core for managing the PoC services for the PoC Clients 136 using SIP protocol. The PoC Server 112 implements a Control Plane portion of Controlling and Participating PoC Functions. A Controlling PoC Function acts as an arbitrator for a PoC Session and controls the sending of control and bearer traffic by the PoC Clients 136. A Participating PoC Function relays control and bearer traffic between the PoC Client 136 and the PoC Server 112 performing the Controlling PoC Function.

### 2.4.2 Media Server

The Media Server 114 implements a User Plane portion of the Controlling and Participating PoC Functions. The Media Server 114 supports the Controlling PoC Function by duplicating voice packets received from an originator PoC Client 136 to all recipients of the PoC Session. The Media Server 114 also supports the Participating PoC Function by relaying the voice packets between PoC Clients 136 and the Media Server 114 supporting the Controlling PoC Function. The Media Server 114 also handles packets sent to and received from the PoC Clients 136 for floor control during PoC call sessions.

### 2.4.3 Presence Server

The Presence Server 110 implements a presence enabler for the PoC Service. The Presence Server 110 accepts, stores and distributes Presence Information for Presentities, such as PoC Clients 136.

The Presence Server 110 also implements a Resource List Server (RLS), which accepts and manages subscriptions to Presence Lists. Presence Lists enable a "watcher" application to subscribe to the Presence Information of multiple Presentities using a single subscription transaction.

The Presence Server 110 uses certain XDM functions to provide these functions, which are provided by XDM Server 108.

### 2.4.4 XDM Server

The XDM Server 108 implements an XDM enabler for the PoC Service. The XDM enabler defines a common mechanism that makes user-specific service-related information accessible to the functions that need them. Such information is stored in the XDM Server 108 where it can be located, accessed and manipulated (e.g., created, changed, deleted, etc.). The XDM Server 108 uses well-structured XML documents and HTTP protocol for access and manipulation of such XML documents. The XDM Server 108 also connects to the operator SMSC 128 for the purposes of PoC Client 136 activation using SMS. In addition, the XDM Server 108 maintains the configuration information for all PoC subscribers.

### 2.4.5 Gateway

The Gateway 142 implements a interworking solution for the PoC Service to communicate via one or more IP network 144 access points to the PoC Clients 136. Specifically, the Gateway 142 provides PoC Service over an IP network 144 (such as an external WiFi network), as well as the wireless data networks 126, and supports a seamless user experience while the transport of IP control messages and IP voice data is transitioned between different types of wireless communications networks, such as wireless data networks 126 comprising cellular data packet networks and IP networks 142. The Gateway 142 also resolves security concerns that arise with such interworking solutions.

This is necessary because the quality, performance and availability of the wireless data networks 126 typically vary from location to location based on various factors. In addressing these issues, the interworking solution implemented by the Gateway 142 provides following benefits:
- PoC Services becomes available even in those locations where a wireless data network 126 is not available, but where a general purpose IP network 144 is available. This is particularly more useful in enhancing in-building coverage for the PoC Service.
- By connecting over the IP network 144, the available IP bandwidth, quality and performance can be more streamlined and controlled since the IP network 144 (typically) has a greater capacity and throughput as compared to the wireless data network 126, which is more shared in nature.
- By utilizing the greater available bandwidth over the IP network 144, as compared to the wireless data network 126, it is possible to provide additional services (such as sharing large files) which otherwise is inefficient and costly on wireless data networks 126.

These and other aspects of the interworking solution are described in more detail below.

### 2.5 Management Layer Elements

As noted above, the Management Layer 104 is comprised of the following elements:
- Element Management System (EMS) Server 116,
- Lawful Intercept (LI) Server 118,
- Web Group Provisioning (WGP) Server 122, and
- Web Customer Service Representative (WCSR) Server 120.

These elements are described in more detail below.

### 2.5.1 EMS Server

The EMS Server 116 is an operations, administration, and maintenance platform for the system 100. The EMS Server 116 enables system administrators to perform system-related configuration, network monitoring and network performance data collection functions. The EMS Server 116, or another dedicated server, may also provide billing functions. All functions of the EMS Server 116 are accessible through a web-based interface.

### 2.5.2 LI Server

The LI Server 118 is used for tracking services required by various Lawful Enforcement Agents (LEAs). The LI Server 118 generates and pushes an IRI (Intercept Related Information) Report for all PoC Services used by a target. The target can be added or deleted in to the PoC Server 112 via the LI Server 118 using a Command Line Interface (CLI).

### 2.5.3 WGP Server

The WGP Server 122 provides a web interface for corporate administrators to manage PoC contacts and groups. The web interface includes contact and group management operations, such as create, delete and update contacts and groups.

### 2.5.4 WCSR Server

The WCSR Server 120 provides access to customer service representatives (CSRs) for managing end user provisioning and account maintenance.

Typically, it supports the following operations:
- Create Subscriber account,
- Update Subscriber account,
- Delete Subscriber account,
- Mobile number change command,
- View Subscriber details (MDN, Group, Group members),
- Manage Corporate Accounts,
- Add CSR account,
- Delete CSR account.

### 3 System Functions

The following sections describe various functions performed by each of the components of the system architecture.

### 3.1 PoC Service Layer

### 3.1.1 PoC Server

The PoC Server 112 controls PoC call sessions, including 1-1, Ad Hoc and Pre-Arranged PoC call sessions. The PoC Server 112 also controls Instant Personal Alerts.

The PoC Server 112 expects the PoC Clients 136 to setup "pre-established sessions" at the time of start up and use these sessions to make outgoing PoC calls. The PoC Server 112 also uses pre-established sessions to terminate incoming PoC calls to the PoC Clients 136. The PoC Clients 136 are setup in auto-answer mode by default. The use of pre-established sessions and auto-answer mode together allow for faster call setup for PoC call sessions.

The PoC Server 112 allocates and manages the media ports of the Media Services 114 associated with each SIP INVITE dialog for pre-established sessions and controls the Media Servers 114 to dynamically associate these ports at run time for sending RTP packets during PoC call sessions. Media ports are assigned and tracked by the PoC Server 112 at the time of setting up pre-established sessions. The PoC Server 112 instructs the Media Server 114 to associate the media ports of various subscribers dynamically into a session when a PoC call is originated and this session is maintained for the duration of the call. The PoC Server 112 also controls the floor states of the various participants in a PoC call session by receiving indications from the Media Servers 114 and sending appropriate requests back to the Media Servers 114 to send MBCP messages to the participants in the PoC call. The Media Server 114 uses the media ports association and current talker information to send the RTP packets from the talker's media port onto the listeners' media ports.

In addition, the PoC Server 112 handles the incoming and outgoing Instant Personal Alerts (IPAs) by routing SIP MESSAGE requests to the PoC Clients 136 and remote PoC Servers 112 for final delivery as applicable.

The PoC Server 112 uses static and dynamic data related to each subscriber to perform these functions. Static data include subscriber profile, contacts and groups. Dynamic data include the subscriber's registration state, PoC settings and SIP dialog states are maintained only on the PoC Server 112.

### 3.1.2 Media Server

The Media Server 114 handles the flow of data to and from the PoC Clients 136 as instructed by the PoC Server 112. Each Media Server 114 is controlled by a single PoC Server 112, although multiple Media Servers 114 may be controlled by a PoC Server 112 simultaneously.

The Media Server 114 is completely controlled by the PoC Server 112. As noted above, even the media ports of the Media Server 114 are allocated by the PoC Server 112 and then communicated to the Media Server 114. Likewise, floor control requests received by the Media Server 114 from PoC Clients 136 are sent to the PoC Server 112, and the PoC Server 112 instructs the Media Server 114 appropriately. Based on these instructions, the Media Server 114 sends floor control messages to the PoC Clients 136 and sends the RTP packets received from the talker to all the listeners.

### 3.1.3 Presence Server

The Presence Server 110 accepts presence information published by PoC Clients 136, as well as availability information received from other entities. The Presence Server 110 keeps track of these presence states and sends notifications to various "watcher" applications whenever a presence state changes. The Presence Server 110 maintains separate subscriptions for each watcher and dynamically applies the presence authorization rules for each watcher independently.

The Presence Server 110 also accepts resource list subscriptions from the watchers, which identify one or more entities ("Presentities") whose presence should be monitored. The Presence Server 110 then aggregates all the presence information into one or more presence notifications transmitted to each watcher. This allows watchers to subscribe to large number of Presentities without putting strain on the network as well as client and server resources.

### 3.1.4 XDM Server

The XDM Server 108 performs client authentication and subscription functions. The XDM Server 108 also stores subscriber and group information data. The XDM Server 108 also interacts with the SMSC 128 to receive PoC Client 136 activation commands.

All subscriber provisioning and CSR operations in the XDM Server 108 are performed through the WCSR Server 120, while corporate administrative operations, as well as contacts and group management, are handled through the WGP Server 122.

The XDM Server 108 includes a Subscriber Profile Manager module that provides subscriber management functionality, such as creation, deletion and modification of subscriber profiles. The subscriber profile includes data such as the MDN, subscriber name, subscriber type, etc. This also determines other system-wide configurations applicable for the subscriber including the maximum number of contacts and groups per subscriber and the maximum number of members per group.

The XDM Server 108 includes a Subscriber Data Manager module that manages the subscriber document operations, such as contact and group management operations, initiated by the PoC Clients 136 or the WGP Server 122.

### 3.1.5 Gateway

The Gateway 142 performs interworking for the PoC service by communicating with the PoC Clients 136 via one or more IP networks 142 and/or wireless data networks 126.

The PoC Client 136 sets up one or more connections using the configured Fully Qualified Domain Name (FQDN), or absolute domain name, of the Gateway 142, which may be publicly exposed to the Internet 142. Secure transport protocols may (or may not) be used for the connections across the IP networks 142 and/or wireless data networks 126. For example, the PoC Clients 136 may use the Transport Layer Security (TLS) and/or Secure Sockets Layer (SSL) protocols for encrypting information transmitted over the connections between the PoC Client 136 and the Gateway 142.

In such an embodiment, all SIP signaling and voice data (RTP and RTCP) would be tunneled over the SSL/TLS connections between the PoC Client 136 and the Gateway 142. XCAP signaling may be transmitted using a Hypertext Transfer Protocol Secure (HTTPS) protocol, which results from layering the Hypertext Transfer Protocol (HTTP) on top of the SSL/TLS connections, thus adding the security capabilities of SSL/TLS to standard HTTP communications.

Consequently, the Gateway 142 performs as an encryption/decryption off-loader that provides end-to-end encryption for all traffic transmitted to and from the PoC Client 136. Specifically, all of the traffic sent to the PoC Client 136 is encrypted at the Gateway 142 and all the traffic received from the PoC Client 136 is decrypted at the Gateway 142.

The Gateway 142 terminates the SSL/TLS connections and aggregates or dis-aggregates the PoC Client 136 traffic to the appropriate Servers 108, 110, 112, 114, 116, 118, 120 and 122. Specifically, the Gateway 142 acts as an intelligent traffic distributor for SIP signaling and RTP/RTCP traffic by forwarding the traffic to the appropriate Servers 108, 110, 112, 114, 116, 118, 120 and 122, depending on the message types and the availability of the Servers 108, 110, 112, 114, 116, 118, 120 and 122. Consequently, the Gateway 142 is a single point-of-contact for all traffic to and from the PoC Clients 136 at an IP transport layer via the IP networks 142 and/or wireless data networks 126.

Typically, the SSL/TLS connections are persisted and used for any bidirectional data transfer between the Gateway 142, or other Servers, and the PoC Clients 136. Thus, a PoC Client 136 maintains an "always-on" connection with the Gateway 142 by periodically sending "keep-alive" messages over the SSL/TLS connections.

The system also simplifies the use of the WiFi APs 144 and Multicast Routers 146.

### 3.2 Management Layer

### 3.2.1 EMS Server

The EMS Server 116 is the central management entity in the system and includes the following modules:
- A central application where all management business logic resides.
- A web server for serving the network operator's internal users. A corresponding client provides a user interface for viewing fault, configuration, performance and security information.
- A subsystem is provided for health monitoring of network elements deployed in the system and also to issue any maintenance commands as applicable.

### 3.2.2 WCSR Server

The WCSR Server 120 provides a web user interface for customer service representatives (CSRs) to carry out various operations. The web user interface provides access to CSRs for managing subscriber provisioning and account maintenance. Typically, it supports the following operations.
- Create Subscriber account,
- Update Subscriber account,
- Delete Subscriber account,
- Mobile number change command,
- Forced synchronization of a Subscriber,
- Deactivate a Subscriber account,
- Reactivate a Subscriber account,
- View Subscriber details, such as MDN, Group, Group members.

### 3.2.3 WGP Server

The WGP Server 122 allows provides for central management of all corporate subscribers and associated contacts and groups within a corporation. The WGP Server 122 allows corporate administrators to manage contacts and groups for corporate subscribers.

The WGP Server 122 includes a Corporate Administration Tool (CAT) that is used by corporate administrators to manage contacts and groups of corporate subscribers. The CAT has a Web User Interface for corporate administrators that supports the following operations:
- Group management,
- Contact management, and
- Associations between corporations.

With regard to group management, the CAT of the WGP Server 122 includes the following operations:
- Create, Update, Delete and View Corporate Groups,
- Add, Update, Delete and View Members of a Corporate Group,
- Manage Subscribers,
- Activate and Deactivate a Corporate Subscriber,
- Change a Subscriber type from "Corporate" to "Corporate And Public", and vice versa,
- Restrict Availability, i.e., do not allow subscriber to change their presence status, and
- Manage number porting or name change via phone assignment.

With regard to contact management, the CAT of the WGP Server 122 includes the following operations:
- Phone list management,
- NxN Contact Add (e.g., N contacts may be members of N groups),
- Add, Update, Delete and View Contacts for a specific subscriber, and
- Export and Import contacts at both the subscriber and corporate level.

With regard to associations between corporations, the CAT of the WGP Server 122 includes the following operations:
- Corporate Associations Attributes,
- Association Name,
- Association ID,
- Association Mode (e.g., One-way, Two-way), and
- Restricted List.

Once the association is created and accepted, corporate administrators can create contacts and groups using the association policies. Administrators from other corporations can view the contacts, and may or may not have the capability to add, update or delete the contacts.
- Corporate ID associated per corporate subscriber,
- Central management of corporate subscribers, groups, and contacts,
- Intercorporate associations, including contacts and white-lists,
- Phone list management (e.g., NxN contact add),
- Restrict Availability, and
- Import and Export contacts at both the subscriber and corporate level.

Note that, if the association is deleted, then usually all intercorporate contacts and group members will be deleted.

### 3.3 PoC Client

The PoC Client 136 is an OMA-compatible client application executed on a handset 134. The following features are supported by the PoC Client 136:
- PoC Calls and Instant Personal Alert,
- Presence, and
- Contact and Group Management.

The PoC Client 136 includes a database module, a presence module, an XDM module and a client module.

The database module stores configuration information, presence information, contact and group information, user settings, and other information in an optimized and persistent way. Information is preserved when the user unregisters with the PoC Server 112 or power cycles the device. The database module also has a mechanism to reset the data and synchronize from the XDM Server 108 when the data in the database module is corrupt or unreadable.

The presence module creates and maintains the presence information for the subscriber. Typically, the presence information supports Available, Unavailable and Do-not-Disturb (DnD) states. The presence module also subscribes to the Presence Server 110 as a "watcher" of all contacts in the handset 134 and updates the user interface of the handset 134 whenever it receives a notification with such presence information.

The XDM module communicates with the XDM Server 108 for management of contacts and groups. The XDM module may subscribe with the XDM Server 108 to send and receive any changes to the contacts or group list, and updates the user interface of the handset 134 based on the notifications it receives from the XDM Server 108.

The client module provides the most important function of making and receiving PoC calls. To support PoC calls, the client module creates and maintains pre-established sessions with the PoC Server 112. The client module supports 1-1, Ad Hoc and Pre-Arranged PoC calls. The client module also supports sending and receiving Instant Personal Alerts (IPA).

### 4 State Diagram For A PoC Call Session

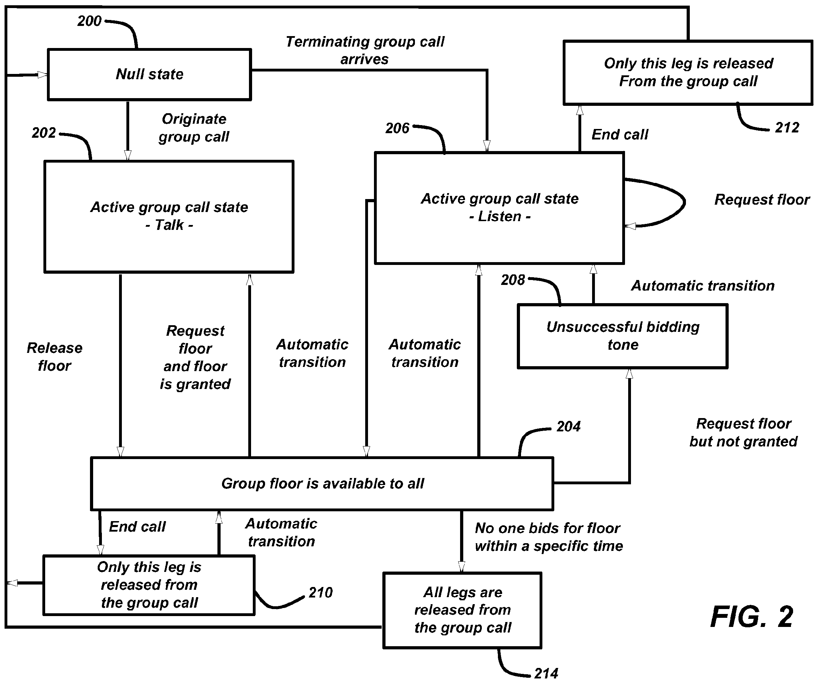

FIG. 2 is a state diagram that illustrates the operation of a PoC call session according to one embodiment of the present invention.

State 200 represents a PoC Client 136 in a NULL state, i.e., the start of the logic. A transition out of this state is triggered by a user making a request to originate a PoC call, or by a request being made to terminate a PoC call at the handset 134. A request to originate a PoC call is normally made by pressing a PoC button, but may be initiated in this embodiment by dialing some sequence of one or more numbers on the handset 134 that are interpreted by the PoC Server 112, by pressing one or more other keys on the handset 134 that are interpreted by the PoC Server 112, by speaking one or more commands that are interpreted by the PoC Server 112, or by some other means.

State 202 represents the PoC Client 136 in an active group call state, having received a "floor grant" (permit to speak). In this state, the user receives a chirp tone that indicates that the user may start talking. The user responds by talking on the handset 134. The handset 134 uses the reverse traffic channel to send voice frames to the Media Server 114, and the Media Server 114 switches voice frames only in one direction, i.e., from talker to one or more listeners, which ensures the half-duplex operation required for a PoC call.

State 204 represents the group "floor" being available to all members of the group. When the talking user signals that the floor is released, the floor is available to all group members. The signal to release the floor is normally made by releasing the PoC button, but may be performed in this embodiment by voice activity detection, e.g., by not speaking for some time period (which is interpreted by the PoC Server 112 as a release command). All members of the group receive a "free floor" tone on their handset 134. A user who requests the floor first (in the "free-floor" state), for example, is granted the floor, wherein the system 100 sends a chirp tone to the successful user. The signal to request the floor is normally made by pressing the PoC button, but may be performed in this embodiment by voice activity detection, e.g., by speaking for some time period (which is interpreted by the PoC Server 112 as a request command).

State 206 represents the PoC Client 136 being in an active group call state. In this state, the user is listening to the group call. If a non-talking user requests the floor in the active group call state, the user does not receive any response from the system 100 and remains in the same functional state. As noted above, the signal to request the floor is normally made by pressing the PoC button, but may be performed in this embodiment by voice activity detection, e.g., by speaking for some time period (which is interpreted by the PoC Server 112 as a request command).

State 208 represents a user receiving an "unsuccessful bidding" tone on his handset 134, after the user has requested the floor, but was not granted the floor, of the group call. The user subsequently listens to the voice message of the talking user.

Non-talking users (including the talking user who must release the floor to make it available for others) can request the system 100 to end their respective call legs explicitly.

State 210 represents a terminating leg being released from the call after the user ends the call.

State 212 also represents a terminating leg being released from the call after the user ends the call.

State 214 represents all terminating legs being released from the call when no user makes a request for the within a specified time period, or after all users have ended their respective call legs.

### 5 Group Calls Using Relay-Mode And Direct-Mode

### 5.1 Overview

The present invention provides solutions for performing group calls using Relay-Mode and/or Direct-Mode operations. Specifically, the present invention provides call delivery methods for group calls using Relay-Mode and Direct-Mode operations with a local area network (LAN), which may be a local WiFi network 146, or with a network of handsets 134 communicating using Direct Mode communications. Using Relay-Mode and Direct-Mode operations, not all participants' devices are required to be connected directly to a wide area network (WAN), such as the cellular phone network 124, wireless data network 126, or IP network 144.

### 5.2 Introduction

Advanced voice services (AVS), especially Advanced Group Services (AGS), such as Push-to-talk-over-Cellular (PoC), Push-to-Talk (PTT), or Press-to-Talk (P2T), as well as Broadcast Calls, can burden network and server resources significantly due to the large number of control and voice messages, especially group calls that involve a large number of participants. The burden on both network and server resources can cause intermittent failures or more serious issues where service could become completely unusable.

When the group calls are PoC or PTT calls, there will be only one talker at a time and there will be multiple listeners, wherein the participants of the call can take turns talking (transmitting) using the floor control mechanisms described above, while other participants will only listen. In PoC or PTT calls, the PoC Server 112 is required to replicate the voice packets received from the talker leg to one or more listener legs, for example, using the Media Server 114, so that the PoC Client 136 or other applications in the handsets 134 can receive the packets and play the voice. When a unicast network bearer is used, the voice packets need to duplicated for each of the listener legs separately. When a multicast network bearer is used, the voice packets need to be duplicated for each of the multicast streams, wherein a single multicast stream may service a set of one or more listener legs.

When the group calls are broadcast calls, which are a variant of PoC and PTT calls, there will be only one talker and the rest of the members of the group are only allowed to listen. Like PoC and PTT calls, the PoC Server 112 is required to replicate the voice packets received from the talker leg to one or more listener legs, for example, using the Media Server 114, so that the PoC Client 136 or other applications in the handsets 134 can receive the packets and play the voice. Like PoC and PTT calls, the voice packets need to duplicated for each of the listener legs separately when a unicast network bearer is used, and the voice packets need to be duplicated for each of the multicast streams, wherein a single multicast stream may service a set of one or more listener legs, when a multicast network bearer is used. In the case of broadcast calling, based on the nature of its usage, the requirement to deliver the voice packets in real-time may be less stringent than interactive group calls. On the other hand, the number of participants in the group could be much larger, including potentially thousands of users.

Such simultaneous transmission of voice packets to large numbers of listener legs may strain network resources, especially for Radio Access Networks (RANs), such as cellular wireless networks 124 and wireless data networks 126, which are designed for highly optimized usage of the wireless spectrum and usage of the air interface (wireless spectrum) is scheduled for each user based various factors in the network, such as available spectrum bandwidth, overall load conditions, priority of the user, etc. This could cause service quality degradation or the complete loss of service to participants.

Network congestion problems would likely be more severe when the RAN used to deliver the call comprises the cellular phone network 124. Typically, the cellular phone network 124 is not equipped to handle sudden large surge of IP traffic.

In addition, the packet delivery ability of the RAN is influenced by various factors. Such factors may include the load on the network, the distance of the handset 134 from the network antenna 132, path losses due to the surrounding environment, and other factors.

Generally, in such circumstances it may be beneficial to utilize a Relay-Mode or Delay-Mode operation, as described in more detail below.

### 5.3 Relay-Mode

In Relay-Mode operation, one or more of the handsets 134 of a group is assigned to be a Relay Device that routes a group call between the WAN and other handsets 134 of the group that are accessible only by the LAN. The Relay Device allows handsets 134 that may not currently have access to the WAN, but do have access to the Relay Device via the LAN, to participate in the group call.

In this embodiment, some or all of the handsets 134 that comprise a group may be enabled to use any or all of the networks 124, 126 and/or 142 that comprise the WAN. In addition, some or all of the handsets 134 that comprise a group may be WiFi-enabled, such that they can communicate locally among themselves using the local WiFi network 146 that comprises the LAN. However, some of the handsets 134 in the group may be blocked from and currently not have access to the WAN. On the other hand, some of these handsets 134 in the group may have access to the LAN. In Relay-Mode operation, the handsets 134 that are Relay Devices route IP packets between themselves and other handsets 134 using the LAN and, in turn, relay these IP packets to the WAN.

In effect, the Relay Devices act as routers for the other handsets 134, thereby enabling access to the group call for handsets 134 that are blocked from and currently do not have access to the WAN.

Another benefit of Relay-Mode operation is the possibility of utilizing IP Multicast Mode packet delivery for broadcast calls over the LAN, without requiring any special network configurations to tunnel the IP Multicast Mode packets over the WAN.

### 5.3.1 Relay-Mode Operation With Limited RAN Connectivity And Local WiFi Connectivity

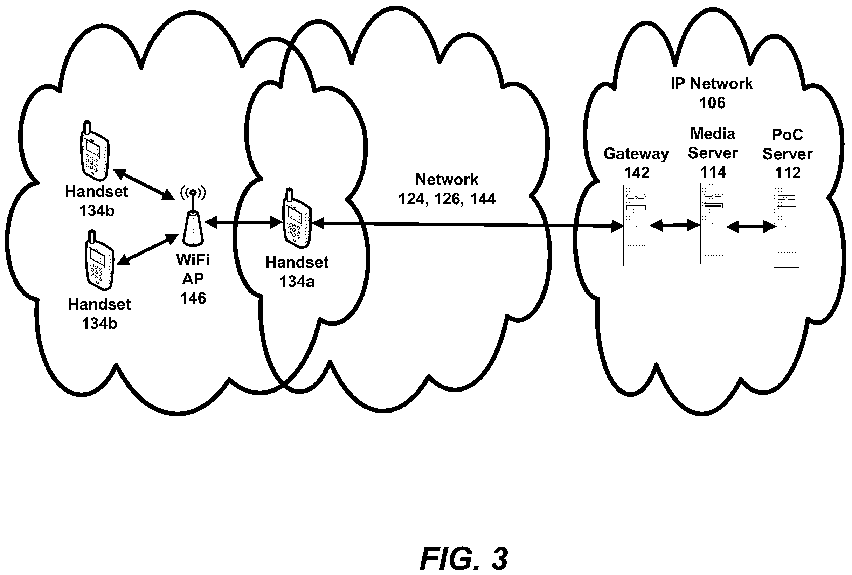

FIG. 3 illustrates Relay-Mode operation when there is limited RAN connectivity to the WAN, but local WiFi connectivity to the LAN, for one or more handsets in a group, according to one embodiment of the present invention.

In this embodiment, at least one handset 134a that includes a PoC Client 136 is assigned a role as a Relay Device 134a. Preferably, the role of Relay Device 134a is assigned by the PoC Server 112, although that function may be delegated to other servers as well.

The PoC Server 112 maintains a list of all handsets 134 with PoC Clients 136 connected through the LAN, but not the WAN. The local WiFi network 146 may be identified, for example, by the WiFi Service Set Identifier (SSID), which comprises the WiFi network 146 name.

The role of Relay Device 134a is assigned by the PoC Server 112 based on one or more criteria, such as signal strength, battery power level, type of handset 134a, etc. The PoC Server 112 may assign the role of Relay Device 134a to more than one handset 134 within the WiFi SSID.

The PoC Server 112 then informs all of the other handsets 134b within the group of the Relay Device 134a. The other handsets 134b that lack RAN connectivity to the WAN, but have local WiFi network 146 connectivity to the LAN, connect instead with the Relay Device 134a through the LAN. The use of the Relay Device 134a thus extends the coverage for group calling to handsets 134b in a larger area.

The Relay Device 134a may establish a secure IP connection (e.g., TLS, DTLS, SRTP, etc.) with the PoC Server 112, Media Server 114, Gateway140, and/or the other handsets 134b to accomplish its functions. The Relay Device 134a may connect to the PoC Server 112, Media Server 114, Gateway140, through the WAN, i.e., via the cellular phone network 124, the wireless data network 126 and/or the IP network 144.

The Relay Device 134a performs an IP forwarding function, i.e., it receives IP packets from the PoC Server 112 and/or Media Server 114 via the WAN, and forwards the IP packets to other handsets 134b via the LAN. Similarly, the Relay Device 134a receives the IP packets from the other handsets 134b via the LAN, and relays the IP packets to the PoC Server 112 and/or Media Server 114 via the WAN.

The Relay Device 134a may also provide a packet duplication function for media and floor control. For example, the leader Relay Device 134a may receive an IP packet stream for a group call from the PoC Server 112 and/or Media Server 114, and then duplicate the IP stream to the other handsets 134b within the group that are covered under the relay. The duplicated IP streams could be unicast to each of the other handsets 134b; alternatively, the IP streams could be multicast to all of the other handsets 134b.

In one embodiment, there may be multiple Relay Devices 134a, wherein the Relay Devices 134a communicate with each other, in order to elect one of the handsets 134a as a leader Relay Device 134a. The election of the leader Relay Device 134a can be based on specified WiFi network 146 conditions, at the Relay Devices 134a or the WiFi AP 146, such as signal strength, battery level, quality of Internet/WAN access, etc. The leader Relay Device 134a then communicates with the PoC Server 112 and/or the Media Server 114 over the WAN.

The other handsets 134b that lack RAN connectivity to the WAN, but have local WiFi connectivity to the LAN, connect to one or more of other Relay Devices 134a, or the leader Relay Device 134a. In turn, the other Relay Devices 134a connect to the leader Relay Device 134a. Each of the Relay Devices 134a keeps track of the handsets 134b connected through them to the leader Relay Device 134a.

### 5.3.3 Relay-Mode Operation With Unicast Tunneling Of Multicast Packets

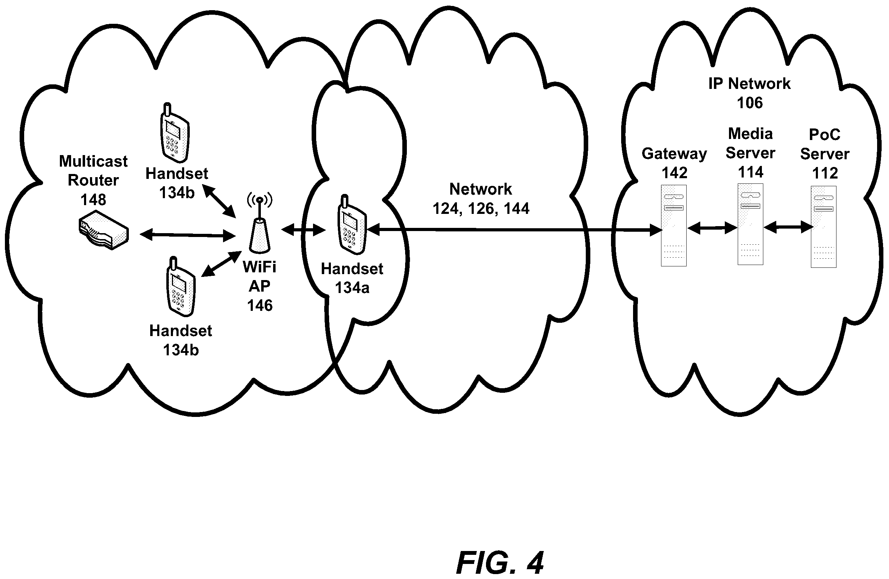

FIG. 4 illustrates Relay-Mode operation when there is limited RAN connectivity to the WAN, with local WiFi connectivity to the LAN, and the unicast tunneling of multicast IP packets, for one or more handsets in a group, according to one embodiment of the present invention.

In this embodiment, the use of the Relay Device 134a also enables seamless transportation of multicast IP packets to the local WiFi network 146. For example, multicast IP packets often cannot be sent over the Internet to a private WiFi network 146 directly, because most routers drop such multicast IP packets.

Using the Relay Device 134a, however, no special network configuration is required to tunnel multicast IP packets to the private WiFi network 146. For example, the PoC Server 112 and/or Media Server 114 may encapsulate multicast IP packets within unicast IP packets transmitted to the Relay Device 134a. The Relay Device 134a then forwards the multicast IP packets to one or more Multicast Routers 148 within the private WiFi network 146. In turn, the Multicast Routers 148 route the multicast IP packets locally to the other handsets 134b within the private WiFi network 146.

Otherwise, the Relay Device 134a operate in the same manner as described above in FIG. 3.

### 5.4 Direct-Mode

Sometimes it is necessary to provide PoC calls when the WAN and/or the LAN is severely congested, or the WAN and/or the LAN is completely inaccessible, leading to either complete loss of service or serious degradation of service quality. During such network congestion conditions, generally it is beneficial to utilize the Direct-Mode operation for PoC calls, in which one or more of the participants' handsets 134 is chosen as an Anchoring Point, such that it can route IP packets between participants' handsets 134 that cannot be accessed using the local WiFi network 146 using WiFi-Direct.

In Direct-Mode operation, one or more of the handsets 134 of a group is assigned to be an Anchoring Point that routes a group call between the WAN and other handsets 134 of the group that are accessible only by WiFi-Direct or other direct modes of communication (such as Family Radio Service (FRS), General Mobile Radio Service (GMRS), or Terrestrial Trunked Radio (TETRA)). The Anchoring Point allows handsets 134 that may not currently have access to either the WAN or the LAN, but do have access to the Anchoring Point via WiFi-Direct, to participate in the group call.

In this embodiment, some or all of the handsets 134 that comprise a group may be enabled to use any or all of the networks 124, 126 and/or 142 that comprise the WAN. In addition, some or all of the handsets 134 that comprise a group may be WiFi-enabled, such that they can communicate locally among themselves using the local WiFi network 146 that comprises the LAN and/or WiFi-Direct. However, some of the handsets 134 in the group may be blocked from and currently not have access to the WAN. In addition, some of these handsets 134 in the group may not have access to the LAN, but do have connectivity to other handsets 134. In Direct-Mode operation, the handsets 134 that are Anchoring Points route IP packets between themselves and other handsets 134 using WiFi-Direct and, in turn, relay these IP packets to the WAN or the LAN.

In effect, the Anchoring Points act as routers for the other handsets 134, thereby enabling access to the group call for handsets 134 that are blocked from and currently do not have access to the WAN.

### 5.4.1 Direct-Mode Operation With Limited RAN Connectivity And No Local WiFi Connectivity

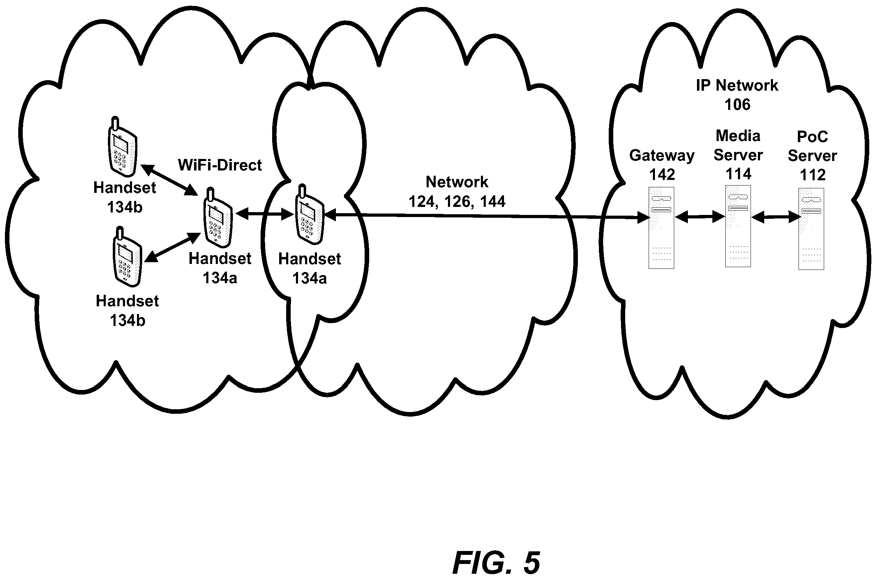

FIG. 5 illustrates Direct-Mode operation when there is limited RAN connectivity to the WAN, and no local WiFi connectivity to the WAN through the LAN, but there is Direct-Mode connectivity using WiFi-Direct, for one or more handsets in a group, according to one embodiment of the present invention.

In this embodiment, each of the handsets 134 has a device-to-device capability for Direct-Mode operations using WiFi-Direct communications, where two handsets 134 interact with each other without requiring an intervening LAN infrastructure. This capability is useful as a backup in the event of emergencies, such as disaster situations, or simply when the handsets 134 are outside the LAN coverage area, but at least one of the handsets 134a is within the WAN coverage area.

At least one handset 134a that includes a PoC Client 136 is assigned a role as an Anchoring Point 134a. Specifically, in the absence of a local WiFi network 146, when the handsets 134 have the capability to perform WiFi-Direct, for local WiFi connectivity, the Anchoring Points 134a are handsets 134a that act as Direct-Mode access points, e.g., "hot spots," for the other handsets 134b.

Preferably, the role of Anchoring Point 134a is assigned by the PoC Server 112, although that function may be delegated to other servers as well. The PoC Server 112 maintains a list of all handsets 134 with PoC Clients 136 connected through the Anchoring Point 134a, but not the WAN. The list of all handsets 134 may be identified, for example, as a Direct-Mode Communication Group (DMCG) using a unique identifier assigned and maintained by the PoC Server 112.

The role of Anchoring Point 134a is assigned by the PoC Server 112 based on one or more criteria, such as battery capacity, antenna capability, type of handset 134a, etc. The PoC Server 112 may assign the role of Anchoring Point 134a to more than one handset 134 within the DMCG.

The PoC Server 112 then informs all of the other handsets 134b within the DMCG of the Anchoring Point 134a. The other handsets 134b that lack RAN connectivity to the WAN, and that lack local WiFi network 146 connectivity to the LAN, connect instead with the Anchoring Point 134a using WiFi-Direct. The use of the Anchoring Point 134a thus extends the coverage for group calling to handsets 134b in a larger area.

The Anchoring Point 134a may establish a secure IP connection (e.g., TLS, DTLS, SRTP, etc.) with the PoC Server 112, Media Server 114, Gateway140, and/or the other handsets 134b to accomplish its functions. The Anchoring Point 134a may connect to the PoC Server 112, Media Server 114, Gateway140, through the WAN, i.e., the cellular phone network 124, the wireless data network 126 and/or the IP network 144.

The Anchoring Point 134a performs an IP forwarding function, i.e., it receives IP packets from the PoC Server 112 and/or Media Server 114 via the WAN, and forwards the IP packets to other handsets 134b via WiFi-Direct. Similarly, the Anchoring Point 134a receives the IP packets from the other handsets 134b via WiFi-Direct, and relays the IP packets to the PoC Server 112 and/or Media Server 114 via the WAN.

The Anchoring Point 134a may also provide a packet duplication function for media and floor control. For example, the leader Anchoring Point 134a may receive an IP packet stream for a group call from the PoC Server 112 and/or Media Server 114, and then duplicate the IP stream to the other handsets 134b within the group that are connected via WiFi-Direct. The duplicated IP streams could be unicast to each of the other handsets 134b; alternatively, the IP streams could be multicast to all of the other handsets 134b.

In one embodiment, there may be multiple Anchoring Points 134a, wherein one of the handsets 134a is pre-selected by the PoC Server 112 as a leader Anchoring Point 134a. The selection of the leader Anchoring Point 134a can be based on DMCG criteria, such as battery capacity, antenna capability, type of handset 134, etc. The leader Anchoring Point 134a then communicates with the PoC Server 112 and/or the Media Server 114 over the WAN.

The other handsets 134b that lack RAN connectivity to the WAN, and that lack local WiFi network 146 connectivity to the LAN, connect to the leader Anchoring Point 134a, or one or more of the other Anchoring Points 134a, via WiFi-Direct. In turn, the other Anchoring Points 134a connect to the leader Anchoring Point 134a. Each of the Anchoring Points 134a keeps track of the handsets 134b connected through them to the leader Anchoring Point 134a.

Note that the participants' handsets 134 need to be pre-provisioned, prior to entering to the Direct-Mode of operation, with a required configuration that enables them to discover each other and communicate with each other. This is achieved by having the handset 134, when connected to the PoC Server 112 via the WAN, download the necessary configuration information to the PoC Client 136. The PoC Client 136 on the handset 134 stores this configuration information in order to later invoke Direct-Mode operation.

Specifically, this configuration information may comprise pre-provisioned security credentials that allow the PoC Clients 136 on the handsets 134 to identify and authenticate each other prior to the Direct-Mode operation. Moreover, this configuration information may comprise the pre-assigned unique identification for the DMCG for all handsets 134 in the group.

In alternative embodiments, participants' handsets 134 that are members of a group can communicate with each either directly using the WiFi-Direct communications, or by communicating through the WiFi AP 146, or by some combination of the two modes of communication. For example, the WiFi AP 146 can be used to extend the coverage for Direct-Mode operations, with the use of one or more Relay Devices 134a in the WiFi AP 146 coverage area, combined with the use of one or more Anchoring Points 134a in the WiFi-Direct coverage area. In such an embodiment, the leader Anchoring Point 134a receives a list of all handsets 134 that belong to the DMCG and may enable some of those handsets 134 with Relay-Mode capability as Relay Devices 134a. All the handsets 134 within the DMCG are informed about available Relay-Devices 134a within the DMCG, which enables the handsets 134 to fallback to Relay-Mode operation if possible, during conditions when Direct-Mode communications with the leader Anchoring Point 134a are not possible.

### 5.5 Group Call Delivery Using PoC Calling

In both the Relay-Mode and Direct-Mode operations discussed above, group call origination can be performed by the originating PoC Client 136 using normal PoC call origination methods.

When pre-established PoC sessions are employed, the group call origination involves sending a SIP REFER message with the Group Id (or URI) to the PoC Server 112 and then following the normal SIP/MBCP/RTP mechanisms used for PoC calls. The voice packets are transmitted using RTP packets as in normal PoC calls. The same can also be achieved using an on-demand PoC session that involves sending a SIP INVITE message with the Group Id (or URI) to the PoC Server 112 and then following normal PoC signaling and media transfer mechanisms. Preferably, the PoC Server 112 buffers the voice packets for the group call received from the originator until the voice packets are delivered to all participants of the group call. Group call delivery is performed to the terminating PoC Clients 136 and handsets 134 using normal PoC call termination methods.

### 5.6 Group Call Delivery Using A Messaging Framework

Group call delivery can also be implemented over a messaging framework.

When group calling starts, the PoC Client 136 sets up a messaging session. The PoC Client 136 records media into a file, which it sends periodically to the PoC Server 112. The PoC Server 112 sends the media files one-by-one in sequence to the recipients over the messaging session. The receiving PoC Clients 136 play the media files one-by-one in the order received.

Various methods may be used to transport media files. For example, media files may be transported using SIP/MSRP or HTTP file upload/download methods.

In the SIP/MSRP method, the originating PoC Client 136 establishes a PoC call session to transfer the media files to the PoC Server 112. The originating PoC Client 136 will keep the session established until the large group call is terminated. The PoC Server 112 delivers the media files to the recipients by establishing a PoC call session with each recipient. The transfer of the media files from the originating PoC Client 136 to the PoC Server 112 and from the PoC Server 112 to receiving PoC Clients 136 requires the setting up of MSRP sessions as well.

In the HTTP file upload/download method, the originating PoC Client 136 establishes an HTTP session to transfer the media files to the PoC Server 112. The originating PoC Client 136 may keep the HTTP session established until the group call is terminated. To deliver the media files to the recipients, the PoC Server 112 notifies the recipients via SIP (e.g. SIP NOTIFY) with an HTTP link to download the media files and other information regarding the group call. The recipient PoC Client 136 downloads the media files via an HTTP download mechanism, and then plays the media files.

### 5.7 Group Call Delivery And Floor Exchange Using Multicast And/Or Unicast

As noted above, a multicast PoC group call may be initiated by a PoC Client 136 using a unicast mechanism. When the PoC Server 112 determines that some or all of the group members have joined a multicast group destination, it sends a single MBCP Connect message to each of the multicast IP addresses being used by the group members. The PoC Server 112 also sends separate MBCP Connect messages via unicast to remaining group members who have not joined the multicast group destination. Similarly, the PoC Client 136 that currently has the floor sends voice packets using unicast to the PoC Server 112, wherein the voice packets are duplicated and delivered by the PoC Server 112 to the other participants via multicast and/or unicast. This continues when the floor is released and subsequently taken by another PoC Client 136. That is, upstream voice packets are always unicast, while downstream voice packets are multicast or unicast.

### 5.8 Group Call Delivery Using Multicast Over WiFi Networks

As noted above, group call delivery may be performed using multicast methods over a WiFi network 146. Each handset 134 that is group member receives the group call delivery from the PoC Server 112, wherein there is one multicast address per pre-defined group. The same multicast group destination is used across all of the networks to which group members may be connected,

The originator initiates the group call through unicast signaling to the PoC Server 112. The PoC Server 112 sends an incoming call indication to the group members, using a multicast delivery method via the WiFi AP 146 and Multicast Router 148, or a handset 134 using WiFi-Direct. Handsets 134 that have already joined the multicast group listen for packets at the designated multicast address, and thus they receive the indication. The originator (or the current talker) sends all voice messages (and control messages) by unicast to the PoC Server 112. In turn, the PoC Server 112 sends all voice messages (and control messages) received from the originator (or the current talker) to the listeners using a multicast delivery method, and the messages are subsequently received by all listeners.

### 5.9 Multicast IP Address Provisioning To PoC Clients

In one embodiment, a multicast IP address can be reserved and allocated per group or based on other criteria (such as corporation Id). In such instances, the following steps may be performed:
For each SSID of a WiFi network:
1. Configure a tunneling mechanism such as VPN/GTP.
2. If a VPN is used, configure the shared passwords, the security scheme being used, the IP address of the point of contact, etc.
3. If a GTM is used, configure the IP address of the point of contact, such as an IP address for the Multicast Router 148.
4. The PoC Server 112 automatically assigns a multicast IP address in the following manner:
   - One multicast address per group, and
   - A unique port number per group (e.g. if there are 10 multicast-capable groups, then 10 different ports are allocated).

### 5.10 Group Call Delivery Using LTE eMBMS

A multicast PoC group call may also use LTE eMBMS on the wireless data network 126. Multimedia Broadcast Multicast Services (MBMS) is a point-to-multipoint interface specification for wireless data networks 126, which is designed to provide efficient delivery of broadcast and multicast services, both within a cell as well as within the core network. eMBMS is the LTE version of MBMS.

The MBMS feature is split into the MBMS Bearer Service and the MBMS User Service. The MBMS Bearer Service includes Multicast and Broadcast Modes with only the Broadcast mode available over LTE. The MBMS Bearer Service uses multicast IP addresses for the IP flows. The advantage of the MBMS Bearer Service compared to unicast bearer services is that the transmission resources in the network are shared, and one MBMS packet flow may be replicated as needed by GGSNs 138, SGSNs 140, and radio network controllers such as BSCs or eNodeBs 132.

The MBMS User Service offers both Streaming and Download Delivery Methods. The Streaming Delivery method can be used for continuous transmissions, while the Download Method is intended for "Download and Play" services.

### 5.11 Security Aspects Of Group Call Delivery Using Multicast

Since current multicast network bearer technology allows any client devices to listen to multicast IP packets, it is possible that unintended recipients also can listen to the multicast voice packets that are sent by the PoC Server 112. As a result, encryption of voice and control packets may be required with the decryption keys distributed only to intended recipients of the group call. One approach is to allocate an encryption key for each group, wherein the keys are generated and managed by the PoC Server 112 and the PoC Server 112 distributes the keys to the PoC Clients 136 either at the beginning of the call or beforehand, e.g., during registration, in which case the keys can be refreshed periodically for additional security. A standard SRTP mechanism may be used for encryption and decryption of the RTP and RTCP packets to carry voice and MBCP messages. Keys are communicated to the PoC Client 136 over secure unicast bearer either using SIP over TLS or SIP over DTLS.

### 5.12 The Combination Of Multiple Transports

Group calling methods may be combined based on the participants' access network types and the distribution of members of the group across various access networks. The PoC Server 112 employs mechanisms to track the access network type for group call participants, as well as participants' concentration within a location area covered by an access network or subdivision thereof (such as a cell, sector, access point, etc.).

Consequently, the appropriate calling method may employed to establish calls with each of the participants. For example, the participants' access network type can be tracked during login, periodic registration, on every call origination, or every time the handset 134 changes location, at a subdivision level. In such cases, the PoC Server 112 intelligently decides the appropriate mechanism to be used for each of the participants.

One approach is to utilize unicast methods where the use of multicast is not necessary or multicast is not available. Further, the PoC Server 112 can also take into account the number of group calls occurring in same area, whenever such information is available, to make best efforts to avoid network congestion.

For example, the PoC Server 112 may take the following decision steps in order to use an appropriate calling method based on a participant's network access type:
- The PoC Server 112 determines the total number of online/available participants of the group call. If the number of participants is small enough, so that network congestion is not possible for any of the access networks of the participants, then group calling is establishing using normal PoC calling methods.
- The PoC Server 112 categorizes the potential participants by network access type. If the number of users for each of the access network type does not exceed the limit set for that access network type, then normal PoC calling methods can be used for those participants. Otherwise, a delivery method that avoids network congestion is employed and the chosen calling method is based on the participant's access network type:
   ▪ For participants concentrated in a UMTS cell, message or PoC call based group calling methods are employed.
   ▪ For participants concentrated in an LTE Cell that supports multicast, an eMBMS based calling method is employed.
   ▪ For participants concentrated in a WiFi SSID that supports multicast, a WiFi multicast calling method is employed.
   ▪ For participants concentrated in a WiFi SSID that does not support multicast, a PoC calling/message based group calling method is employed.
   ▪ For participants that are distributed across various locations and network access types, a unicast based regular PoC calling method is employed.
- Alternatively, the PoC Server 112 might be configured to always use certain calling methods regardless of number of users in an access network type. For example, the PoC Server 112 can be configured to use a multicast based call delivery method for all WiFi users on certain SSIDs. In another example, the PoC Server 112 can be configured to use either PoC calling or message based methods for all users on UMTS.
- All limits are configurable in the PoC Server 112.
- The availability of multicast methods are configured in the PoC Server 112 based on the access network type and network identifier, such as SSID for WiFi, and Mobile Network Code (MNC) or Location Area Code (LAC) or Global Cell Id for 4G/LTE. The PoC Client 136 may aid the PoC Server 112 in developing such network capability learning by reporting such information to the PoC Server 112.

### 5.13 Broadcast Calling Overview

Broadcast calling has a number of key requirements. It must support large numbers of members or recipients, possibly up to 10,000 users or more. Moreover, all of the recipients of the broadcast call should able to receive the broadcast call message or voice completely and clearly, with minimal or no voice/packet loss.

The solutions for providing broadcast calling should be RAN and network friendly. The maximum number of simultaneous users that can receive the media/call should not to exceed the RAN/network capacity. Moreover, there should be near real-time delivery reports for each call, so that the originator can monitor the progress of delivery.

There should be options for the originator to review the broadcast call or message before transmitting the broadcast call or message. Possible options include: replay, delete, re-record, etc.

Other options may include:
- Guaranteed delivery of the broadcast call or message,
- Automatic retry attempts when the broadcast call or message is not delivered to the recipient,
- Deferred delivery, i.e. delivery of the broadcast call or message when an offline recipient becomes online,
- Additional discrete media types that can be added to the broadcast call or message, such as picture, text, video or any other media files, for example, a video message that can be transmitted in a broadcast call, instead of or along with, the voice message,
- Delivery that can be scheduled for a future time by the system.

### 5.14 Broadcast Group Management

A number of management tools are needed to support broadcast calling. For example, there should be control mechanisms to limit the capability to originate/send broadcast calls:
- Only privileged members of the group (e.g. administrators, etc.) can originate broadcast calling.
- There could be multiple privileged users in the group.
- Accessibility of the broadcast group participant list:
   ▪ The broadcast group is special type of group, which are maintained by administrators (e.g. using a CAT) with full authority. The broadcast group member list is also manipulated by certain privileged users such as supervisors, as determined by administrators.
   ▪ The visibility of the complete list of broadcast group members is access controlled. Based on an administrator's preference, the list can be made visible to the all members or only privileged members or only to the administrators.
   ▪ The users having access to the complete participant list may have full list readily available in the user's device (or client) or downloaded on demand by the user.
   ▪ Optionally, other users who do not have full access to the list may only have access to the basic information of the group such as group name or list of participants, etc.

For large group call delivery, there is a need for tools to support broadcast call originations:
- An originating PoC Client 136 records the broadcast message.
- Any options for the user to review, record, etc., are provided before the request is established with the PoC Server 112.
- The originating PoC Client 136 sends the broadcast message to the PoC Server 112 as a PoC call originated to the broadcast group (preferred), or as a message sent to the broadcast group.
- Preferably, the PoC Server 112 buffers or records the complete broadcast call.

### 6 Conclusion

The foregoing description of the preferred embodiment of the invention has been presented for the purposes of illustration and description. It is not intended to be exhaustive or to limit the invention to the precise form disclosed. Many modifications and variations are possible in light of the above teaching. It is intended that the scope of the invention be limited not with this detailed description, but rather by the claims appended hereto.

## Claims

1. A system (100) for providing voice communications services in at least one wireless communications network (124,126), comprising:
one or more servers (108, 110, 112, 114, 116, 118, 120, 122) that interface to the wireless communications network to perform communications services for one or more mobile units (134) therein, wherein the communications services include an instant two-way half-duplex voice call within a group of the mobile units comprising a Push-to-Talk PTT call session;
wherein both the servers and the mobile units that use the communications services communicate with each other using control messages within the wireless communications network, and at least one of the servers switches voice messages for the communications services between the mobile units across the wireless communications network;
wherein a first server of the one or more servers manages the call session by acting as an arbitrator for the call session and by controlling the sending of the control messages and the voice messages to and from the group of the mobile units; and
wherein a first mobile unit of the group of the mobile units performs Relay-Mode operations using WiFi communications for delivery of the control messages and the voice messages to and from other mobile units of the group of the mobile units, **characterized in that** the Relay-Mode operations comprise:
receiving, by the first mobile unit, a unicast IP packet encapsulating a multicast IP packet for the PTT call session from the first server over a wide area network WAN; and
forwarding, by the first mobile unit, the multicast IP packet to at least one multicast router within a private WiFi network, wherein the multicast router routes the multicast IP packet within the private WiFi network.

2. The system (100) of claim 1, wherein the group of the mobile units (134) communicate locally among themselves using the WiFi communications for the delivery of the control messages and the voice messages.

3. The system (100) of claim 2, wherein the WiFi communications includes using a local WiFi network.

4. The system (100) of claim 2, wherein the WiFi communications includes using WiFi-Direct.

5. The system (100) of claim 1, wherein the first server maintains a list of mobile units belonging to the group of the mobile units (134).

6. The system (100) of claim 1, wherein access to the WAN, by the other mobile units (134), is limited, and wherein the other mobile units communicates locally among themselves using Direct Mode operations for the delivery of the control messages and the voice messages.

7. The system (100) of claim 1, wherein more than one of the mobile units (134) performs Relay-Mode operations.

8. The system (100) of claim 7, wherein one of the mobile units (134) that perform Relay-Mode operations is elected as a leader for communicating with the wireless communications network, and others of the mobile units that perform Relay-Mode operations communicate with the leader.

9. The system (100) of claim 1, wherein the first mobile unit (134) is assigned to perform the Relay Mode operations by the first server based on one or more criteria.

10. The system (100) of claim 9, wherein the at least one of the servers that assigns the first mobile unit (134) to perform Relay-Mode operations informs the other mobile units of that assignment.

11. The system (100) of claim 1, wherein the first mobile unit that performs Relay-Mode or Direct-Mode operations provides a message duplication function for the packet.

12. The system (100) of claim 1, wherein the first mobile unit that performs Relay-Mode operations provides unicast tunneling of multicast messages from the first server.

13. A method of providing voice communications services in at least one wireless communications network (124, 126), comprising:
interfacing one or more servers (108, 110, 112, 114, 116, 118, 120, 122) to the wireless communications network to perform communications services for one or more mobile units (134) therein, wherein the communications services include a Push-to-Talk PTT or Broadcast call session to a group of the mobile units;
wherein both the servers and the mobile units that use the communications services communicate with each other using control messages within the wireless communications network, and at least one of the servers switches voice messages for the communications services between the mobile units across the wireless communications network;
wherein a first server of the one or more servers manages the call session by acting as an arbitrator for the call session and controls the sending of the control messages and the voice messages to and from the group of the mobile units; and
wherein a first mobile unit of the group of the mobile units performs Relay-Mode operations using WiFi for delivery of the control messages and the voice messages to and from other mobile units of the group of the mobile units, **characterized in that** the Relay-Mode operations comprise:
receiving, by the first mobile unit, a unicast IP packet encapsulating a multicast IP packet for the PTT call session or the Broadcast call session from the first server over a wide area network WAN; and
forwarding, by the first mobile unit, the multicast IP packet to at least one multicast router within a private WiFi network, wherein the multicast router routes the multicast IP packet within the private WiFi network.

14. The system of claim 9, wherein the one or more criteria comprise signal strength of the first mobile unit, battery power level of the first mobile unit, and mobile unit type of first mobile unit.

## Patentansprüche

1. System (100) zum Bereitstellen von Sprachkommunikationsdiensten in wenigstens einem drahtlosen Kommunikationsnetzwerk (124, 126), umfassend:
einen oder mehrere Server (108, 110, 112, 114, 116, 118, 120, 122), die Schnittstellen zu dem drahtlosen Kommunikationsnetzwerk aufweisen, um Kommunikationsdienste für eine oder mehrere darin befindliche mobile Einheiten (134) auszuführen, wobei die Kommunikationsdienste einen instantanen Zweiwege-Halbduplex-Sprachanruf in einer Gruppe der mobilen Einheiten umfassen, die eine Push-to-Talk-Anrufsitzung (PTT) umfassen;
wobei sowohl die Server als auch die mobilen Einheiten, die die Kommunikationsdienste Nutzen, miteinander unter Verwendung von Steuernachrichten in dem drahtlosen Kommunikationsnetzwerk kommunizieren und wobei wenigstens einer der Server Sprachnachrichten für die Kommunikationsdienste zwischen den mobilen Einheiten über das drahtlose Kommunikationsnetzwerk schaltet;
wobei ein erster Server von dem einen oder den mehreren Servern die Anrufsitzung managt, indem er als ein Vermittler für die Anrufsitzung handelt, sowie durch Steuern des Sendens der Steuernachrichten und der Sprachnachrichten zu und von der Gruppe der mobilen Einheiten; und
wobei eine erste mobile Einheit aus der Gruppe der mobilen Einheiten Weiterleitungsmodusoperationen unter Verwendung von WiFi-Kommunikationen zum Liefern der Steuernachrichten und der Sprachnachrichten zu und von anderen mobilen Einheiten aus der Gruppe der mobilen Einheiten ausführt, **dadurch gekennzeichnet, dass** die Weiterleitungsoperationen umfassen:
Empfangen, durch die erste mobile Einheit, eines Unicast-IP-Pakets, das ein Multicast-IP-Paket für die PTT-Anrufsitzung von dem ersten Server über ein Weitbereichsnetzwerk ("wide area network" (WAN)) verkapselt; und
Weiterleiten, durch die erste mobile Einheit, des Multicast-IP-Pakets zu wenigstens einem Multicast-Router in einem privaten WiFi-Netzwerk, wobei der Multicast-Router das Multicast-IP-Paket in dem privaten WiFi-Netzwerk führt.

2. System (100) nach Anspruch 1, wobei die Gruppe der mobilen Einheiten (134) lokal untereinander unter Verwendung der WiFi-Kommunikationen für das Liefern der Steuernachrichten und der Sprachnachrichten kommuniziert.

3. System (100) nach Anspruch 2, wobei die WiFi-Kommunikationen eine Verwendung eines lokalen WiFi-Netzwerks enthalten.

4. System (100) nach Anspruch 2, wobei die WiFi-Kommunikationen eine Verwendung von WiFi-Direct enthalten.

5. System (100) nach Anspruch 1, wobei der erste Server eine Liste von mobilen Einheiten führt, die zu der Gruppe der mobilen Einheiten (134) gehören.

6. System (100) nach Anspruch 1, wobei Zugriff auf das WAN durch die anderen mobilen Einheiten (134) beschränkt ist und wobei die anderen mobilen Einheiten lokal untereinander unter Verwendung von Direktmodusoperationen ("Direct Mode") zum Liefern der Steuernachrichten und der Sprachnachrichten kommunizieren.

7. System (100) nach Anspruch 1, wobei mehr als eine der mobilen Einheiten (134) Weiterleitungsmodusoperationen ausführt.

8. System (100) nach Anspruch 1, wobei eine der mobilen Einheiten (134), die Weiterleitungsmodusoperationen ausführt, als ein Führer zum Kommunizieren mit dem drahtlosen Kommunikationsnetzwerk ausgewählt wird, und andere von den mobilen Einheiten, die Weiterleitungsoperationen ausführen, mit dem Führer kommunizieren.

9. System (100) nach Anspruch 1, wobei die erste mobile Einheit (134) zugewiesen ist, um die Weiterleitungsmodusoperationen durch den ersten Server basierend auf einem oder mehreren Kriterien auszuführen.

10. System (100) nach Anspruch 9, wobei der wenigstens eine der Server, der die erste mobile Einheit (134) zuweist, um Weiterleitungsmodusoperationen auszuführen, die anderen mobilen Einheiten über diese Zuweisung in Kenntnis setzt.

11. System (100) nach Anspruch 1, wobei die erste mobile Einheit, die Weiterleitungsmodus- oder Direktmodusoperationen ausführt, eine Nachrichtenverdopplungsfunktion für das Paket zur Verfügung stellt.

12. System (100) nach Anspruch 1, wobei die erste mobile Einheit, die Weiterleitungsmodusoperationen ausführt, ein Unicast-Tunneln von Multicast-Nachrichten von dem ersten Server zur Verfügung stellt.

13. Verfahren zum Bereitstellen von Sprachkommunikationsdiensten in wenigstens einem drahtlosen Kommunikationsnetzwerk (124, 126), umfassend:
Bilden einer Schnittstelle von einem oder mehreren Servern (108, 110, 112, 114, 116, 118, 120, 122) zu dem drahtlosen Kommunikationsnetzwerk, um Kommunikationsdienste für eine oder mehrere darin befindliche mobile Einheiten (134) auszuführen, wobei die Kommunikationsdienste eine Push-to-Talk-Anrufsitzung (PTT) oder eine Broadcast-Anrufsitzung zu einer Gruppe von mobilen Einheiten enthalten;
wobei sowohl die Server als auch die mobilen Einheiten, die die Kommunikationsdienste nutzen, miteinander unter Verwendung von Steuernachrichten in dem drahtlosen Kommunikationsnetzwerk kommunizieren, und wobei wenigstens einer der Server Sprachnachrichten für die Kommunikationsdienste zwischen den mobilen Einheiten über das drahtlose Kommunikationsnetzwerk schaltet;
wobei ein erster Server von dem einen oder den mehreren Servern die Anrufsitzung managt, indem er als ein Vermittler für die Anrufsitzung handelt und das Senden der Steuernachrichten und der Sprachnachrichten zu und von der Gruppe der mobilen Einheiten steuert; und
wobei eine erste mobile Einheit aus der Gruppe der mobilen Einheiten Weiterleitungsmodusoperationen unter Verwendung von WiFi zum Liefern der Steuernachrichten und der Sprachnachrichten zu und von anderen mobilen Einheiten aus der Gruppe der mobilen Einheiten ausführt, **dadurch gekennzeichnet, dass** die Weiterleitungsoperationen umfassen:
Empfangen, durch die erste mobile Einheit, eines Unicast-IP-Pakets, das ein Multicast-IP-Paket für die PTT-Anrufsitzung oder die Broadcast-Anrufsitzung von dem ersten Server über ein Weitbereichsnetzwerk ("wide area network" (WAN)) verkapselt; und
Weiterleiten, durch die erste mobile Einheit, des Multicast-IP-Pakets zu wenigstens einem Multicast-Router in einem privaten WiFi-Netzwerk, wobei der Multicast-Router das Multicast-IP-Paket in dem privaten WiFi-Netzwerk führt.

14. System nach Anspruch 9, wobei das eine oder die mehreren Kriterien eine Signalstärke der ersten mobilen Einheit, ein Batterie-Leistungs/Energie-Niveau der ersten mobilen Einheit und einen Mobileinheitentyp der ersten mobilen Einheit umfassen.

## Revendications

1. Système (100) pour fournir des services de communications vocales dans au moins un réseau de communications sans fil (124, 126), comprenant :
un ou plusieurs serveurs (108, 110, 112, 114, 116, 118, 120, 122) qui s'interfacent avec le réseau de communications sans fil afin d'effectuer des services de communications pour une ou plusieurs unités mobiles (134) à l'intérieur, où les services de communications incluent un appel vocal semi-duplex bidirectionnel instantané au sein d'un groupe des unités mobiles comprenant une session d'appel Presser pour Parler PTT ;
dans lequel à la fois les serveurs et les unités mobiles qui utilisent les services de communications communiquent les uns avec les autres en utilisant des messages de contrôle dans le réseau de communications sans fil, et au moins l'un des serveurs commute des messages vocaux pour les services de communications entre les unités mobiles à travers le réseau de communications sans fil ;
dans lequel un premier serveur des un ou plusieurs serveurs gère la session d'appel en jouant le rôle d'arbitre pour la session d'appel et en contrôlant l'envoi des messages de contrôle et des messages vocaux à destination et en provenance des unités mobiles ; et
dans lequel une première unité mobile du groupe des unités mobiles effectue des opérations en Mode Relais en utilisant des communications WiFi pour la remise des messages de contrôle et des messages vocaux à destination et en provenance d'autres unités mobiles du groupe des unités mobiles,
**caractérisé en ce que** les opérations en Mode Relais comprennent :
la réception, par la première unité mobile, d'un paquet IP unidiffusion encapsulant un paquet IP multidiffusion pour la session d'appel PTT en provenance du premier serveur sur un réseau étendu WAN ; et
le transfert, par la première unité mobile, du paquet IP multidiffusion à au moins un routeur multidiffusion dans un réseau WiFi privé, où le routeur multidiffusion route le paquet IP multidiffusion dans le réseau WiFi privé.

2. Système (100) selon la revendication 1, dans lequel le groupe des unités mobiles (134) communiquent localement entre elles en utilisant les communications WiFi pour la remise des messages de contrôle et des messages vocaux.

3. Système (100) selon la revendication 2, dans lequel les communications WiFi incluent l'utilisation d'un réseau WiFi local.

4. Système (100) selon la revendication 2, dans lequel les communications WiFi incluent l'utilisation de WiFi-Direct.

5. Système (100) selon la revendication 1, dans lequel le premier serveur maintient une liste d'unités mobiles appartenant au groupe des unités mobiles (134).

6. Système (100) selon la revendication 1, dans lequel l'accès au WAN, par les autres unités mobiles (134), est limité, et dans lequel les autres unités mobiles communiquent localement entre elles en utilisant des opérations en Mode Direct pour la remise des messages de contrôle et des messages vocaux.

7. Système (100) selon la revendication 1, dans lequel plus d'une des unités mobiles (134) effectue des opérations en Mode Relais.

8. Système (100) selon la revendication 7, dans lequel l'une des unités mobiles (134) qui effectue des opérations en Mode Relais est choisie comme leader pour communiquer avec le réseau de communications sans fil, et d'autres des unités mobiles qui effectuent des opérations en Mode Relais communiquent avec le leader.

9. Système (100) selon la revendication 1, dans lequel la première unité mobile (134) est assignée pour effectuer les opérations en Mode Relais par le premier serveur sur la base d'un ou plusieurs critères.

10. Système (100) selon la revendication 9, dans lequel l'au moins un des serveurs qui assigne la première unité mobile (134) pour effectuer des opérations en Mode Relais informe les autres unités mobiles de cette assignation.

11. Système (100) selon la revendication 1, dans lequel la première unité mobile qui effectue des opérations en Mode Relais ou en Mode Direct fournit une fonction de duplication de message pour le paquet.

12. Système (100) selon la revendication 1, dans lequel la première unité mobile qui effectue des opérations en Mode Relais fournit une tunnellisation unidiffusion de messages multidiffusion en provenance du premier serveur.

13. Procédé de fourniture de services de communications vocales dans au moins un réseau de communications sans fil (124, 126), comprenant :
l'interfaçage d'un ou plusieurs serveurs (108, 110, 112, 114, 116, 118, 120, 122) avec le réseau de communications sans fil afin d'effectuer des services de communications pour une ou plusieurs unités mobiles (134) à l'intérieur, où les services de communications incluent une session d'appel Presser pour Parler PTT ou de Diffusion vers un groupe des unités mobiles ;
dans lequel à la fois les serveurs et les unités mobiles qui utilisent les services de communications communiquent les uns avec les autres en utilisant des messages de contrôle dans le réseau de communications sans fil, et au moins l'un des serveurs commute des messages vocaux pour les services de communications entre les unités mobiles à travers le réseau de communications sans fil ;
dans lequel un premier serveur des un ou plusieurs serveurs gère la session d'appel en jouant le rôle d'arbitre pour la session d'appel et contrôle l'envoi des messages de contrôle et des messages vocaux à destination et en provenance des unités mobiles ; et
dans lequel une première unité mobile du groupe des unités mobiles effectue des opérations en Mode Relais en utilisant WiFi pour la remise des messages de contrôle et des messages vocaux à destination et en provenance d'autres unités mobiles du groupe des unités mobiles,
**caractérisé en ce que** les opérations en Mode Relais comprennent :
la réception, par la première unité mobile, d'un paquet IP unidiffusion encapsulant un paquet IP multidiffusion pour la session d'appel PTT ou la session d'appel de Diffusion en provenance du premier serveur sur un réseau étendu WAN ; et
le transfert, par la première unité mobile, du paquet IP multidiffusion à au moins un routeur multidiffusion dans un réseau WiFi privé, où le routeur multidiffusion route le paquet IP multidiffusion dans le réseau WiFi privé.

14. Système (100) selon la revendication 9, dans lequel les un ou plusieurs critères comprennent une intensité de signal de la première unité mobile, un niveau d'alimentation par batterie de la première unité mobile, et un type d'unité mobile de la première unité mobile.
